# EUROPEAN PATENT APPLICATION

(11) **EP 4 648 148 A1**
(43) Date of publication of application: **12.11.2025**
(21) Application number: 24206838.5
(22) Date of filing: 16.10.2024
(51) Int. Cl.: H01M 10/04, H01M 50/466, H01M 10/0525, H01M 10/0583, H01M 10/0585

(54) **THERMAL COMPOSITE LAMINATED CELL AND BATTERY**

(30) Priority: 11.05.2024 CN 202421024177 U; 09.07.2024 WO PCT/CN2024/104484
(71) Applicant: Eve Power Co., Ltd., Jingmen, Hubei 448000 (CN)
(72) Inventor: SU, Bin, Jingmen, Hubei, 448000 (CN); CHEN, Liquan, Jingmen, Hubei, 448000 (CN); CHEN,, Wei, Jingmen, Hubei, 448000 (CN); YUAN, Dingding, Jingmen, Hubei, 448000 (CN); LI, Weibo, Jingmen, Hubei, 448000 (CN); HE, Wei, Jingmen, Hubei, 448000 (CN); LIU, Jincheng, Jingmen, Hubei, 448000 (CN)
(74) Representative: Murgitroyd & Company

(57) **Abstract**

A thermal composite laminated cell and a battery cell are disclosed by this application. The thermal composite laminated battery cell includes a first cell unit (100), a second cell unit (200) and a continuous separator (300), wherein the outermost sides of the first cell unit (100) are negative electrode sheets (110), and the outermost sides of the second cell unit (200) are positive electrode sheets (130). The continuous separator (300) includes a plurality of main body portions (310) and a plurality of bent portions (320) all alternately and continuously disposed, the first cell units (100) and the second cell units (200) are alternately disposed in a thickness direction, and the adjacent first cell unit (100) and the second cell unit (200) are separated by the main body portion (310).

## Description

### TECHNICAL FIELD

The following disclosure relates to a technical field of battery, in particular to a thermal composite laminated cell and a battery.

### BACKGROUND

A laminated cell of lithium battery is prepared by a Z-shaped lamination process. The Z-shaped folding process is to alternately place the positive electrode sheet and the negative electrode sheet on a separator that swings in Z-shape. The continuous separator is folded many times, and there are many processing procedures. The efficiency is low, and the alignment of the negative electrode sheet and the positive electrode sheet is poor.

### SUMMARY

Embodiments of the present application provides a thermal composite laminated cell and battery to solve the problems of low processing efficiency and poor alignment of the existing thermal composite laminated cell.

In a first aspect, embodiments of the present application provide a thermal composite laminated cell, including:
a plurality of first cell units;
a plurality of second cell units, wherein each of the plurality of the first cell units and each of the plurality of the second cell units both include a negative electrode sheet, a separator, and a positive electrode sheet; the negative electrode sheet and the positive electrode sheet are alternately disposed in a thickness direction, and the negative electrode sheet and the positive electrode sheet are separated by the separator, the outermost sides of the plurality of the first cell units are the negative electrode sheets, and the outermost sides of the plurality of the second cell units are the positive electrode sheet;
a continuous separator, including a plurality of main body portions and a plurality of bent portions alternately and continuously disposed, wherein the plurality of the first cell units and the plurality of the second cell units are alternately disposed in a thickness direction, and the plurality of the first cell units and the plurality of the second cell units adjacent to each other are separated by the main body portion.

In a second aspect, an embodiment of the present application further provides a battery comprising the thermal composite laminated cell according to any one of the above items.

Beneficial effects of the present disclosure are as following: the thermal composite laminated cell and the battery are provided by the embodiments of the present application, the thermal composite laminated cell includes a plurality of first battery cell units, a plurality of second battery cell units and a continuous separator. Wherein each of the plurality of the first battery cell units and each of the plurality of the second battery cell units both includes a negative electrode sheet, a positive electrode sheet and a separator. The negative electrode sheet and the positive electrode sheet in each of the plurality of the first battery cell units and in each of the plurality of the second battery cell units are alternately arranged along the thickness direction and are separated by the separator. Two outermost sides of each of the plurality of the first cell units are the negative electrode sheets. Two outermost sides of each of the plurality of the second cell units are the positive electrode sheets. The plurality of the first cell units and the plurality of the second cell units are alternately disposed in a thickness direction. The continuous separator is folded in a Z-shape, which includes a plurality of main body portions and a plurality of bent portions. The main body portions adjacent to each other are connected by the bent portion; the plurality of the first cell units and the plurality of the second cell units adjacent to each other are separated by the main body portion. Both the plurality of the first cell units and the plurality of the second cell units are multi-layer electrode sheet structures. The alignment degree of the negative electrode sheets and the positive electrode sheets in the plurality of the first battery cell unit and the second battery cell unit is controllable. The alignment degree of the first cell unit and the second cell unit is high. The alignment degree of the plurality of the first cell unit and the plurality of the second cell units is high. The thermal composite laminated cell formed after assembling the plurality of the first cell units and the plurality of the second cell units through the continuous separator has high alignment degree, less folding times of the continuous separator, reduces processing procedures, which overcomes the problems of low processing efficiency and poor alignment degree of the prior thermal composite laminated cell, and has the advantages of high processing efficiency and good alignment degree.

### BRIEF DESCRIPTION OF THE DRAWINGS

FIG. 1 is a schematic cross-sectional view of a first form of a thermal composite laminated cell provided by an embodiment of the present application.
FIG. 2 is a schematic cross-sectional view of a second form of a thermal composite laminated cell provided by an embodiment of the present application.
FIG. 3 is a schematic cross-sectional view of form 1 of a first cell unit of a thermally composite laminated cell according to an embodiment of the present application.
FIG. 4 is a schematic cross-sectional view of form 2 of a first cell unit of a thermally composite laminated cell according to an embodiment of the present application.
FIG. 5 is a schematic cross-sectional view of form 3 of a first cell unit of a thermally composite laminated cell according to an embodiment of the present application.
FIG. 6 is a schematic cross-sectional view of form 4 of a first cell unit of a thermally composite laminated cell according to an embodiment of the present application.
FIG. 7 is a schematic cross-sectional view of form 1 of a second cell unit of a thermally composite laminated cell according to an embodiment of the present application.
FIG. 8 is a schematic cross-sectional view of form 2 of a second cell unit of a thermally composite laminated cell according to an embodiment of the present application.
FIG. 9 is a schematic cross-sectional view of form 3 of a second battery cell unit of a thermal composite laminated cell provided by an embodiment of the present application
FIG. 10 is a schematic cross-sectional view of a third form of a thermal composite laminated cell provided by an embodiment of the present application.
FIG. 11 is a schematic cross-sectional view of a fourth form of a thermal composite laminated cell provided by an embodiment of the present application.

### Attached image markup description:

100: first cell unit; 110: negative electrode sheet; 111: negative electrode current collector; 112: negative electrode active layer; 120: separator; 121: isolation unit; 122: first horizontal portion; 123: first connection portion; 124: second horizontal portion; 125: second connection portion; 130: positive electrode sheet; 200: second cell unit; 300: continuous separator; 310: main body portion; 320: bent portion.

### DETAILED DESCRIPTION

Embodiments of the present application provides a thermal composite laminated cell and a battery to solve the problems of low processing efficiency and poor alignment of the existing thermal composite laminated cell.

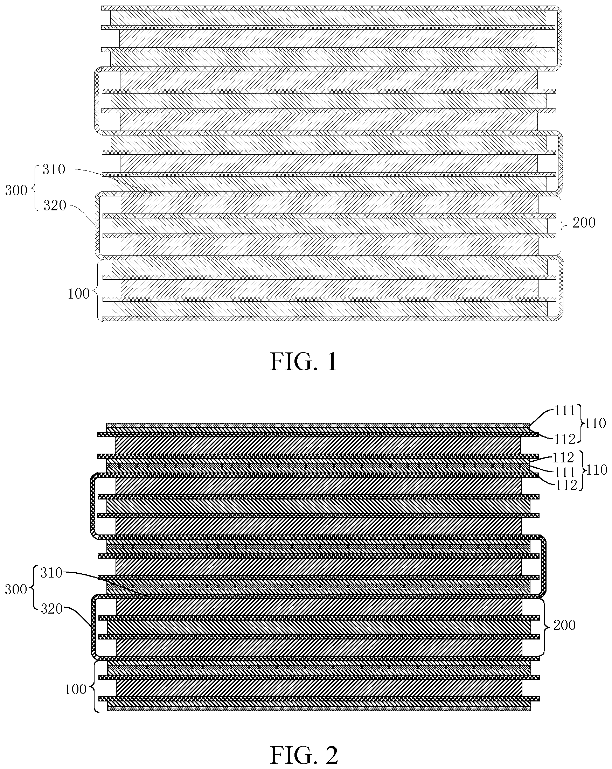

As shown in FIG. 1 to FIG. 2, FIG. 1 is a schematic cross-sectional view of a first form of a thermal composite laminated cell provided by an embodiment of the present application, and FIG. 2 is a schematic cross-sectional view of a second form of a thermal composite laminated cell provided by an embodiment of the present application. A thermal composite laminated cell includes a first cell unit 100, a second cell unit 200, and a continuous separator 300.

In this embodiment, referring to FIG. 1 and FIG. 2, there are M first cell units 100 provided. Each of the first cell unit 100 includes a negative electrode sheet 110, a separator 120, and a positive electrode sheet 130. The negative electrode sheet 110 and the positive electrode sheet 130 are alternately disposed. The negative electrode sheet 110 and the positive electrode sheet 130 are separated by the separator 120. Two outermost sides of each of the first cell unit 100 are the negative electrode sheets 110.

In the present embodiment, as shown in FIGS. 1 and 2, there are N the second cell units 200 provided. The second cell unit 200 includes a negative electrode sheet 110, a separator 120, and a positive electrode sheet 130. The negative electrode sheet 110 and the positive electrode sheet 130 are separated by the separator 120. Two outermost sides of each of the second cell units 200 are the positive electrode sheets 130.

In the present embodiment, as shown in FIGS. 1 and 2, the continuous separator 300 is folded in a Z-shape, which includes a plurality of main body portions 310 and a plurality of bent portions 320. The main body portions 310 adjacent to each other are connected by one of the plurality of the bent portions 320. The plurality of the first cell units 100 and the plurality of the second cell units 200 are alternately disposed in a thickness direction. Both M and N are positive integers, M-N = 1. The number of the first cell units 100 is one more than the number of the second cell units 200. The first cell unit 100, the second cell unit 200, and the first cell unit 100 are arranged in order from bottom to top, so as to alternate to the last first cell unit 100, and the plurality of the first cell units 100 and the plurality of the second cell units 200 adjacent to each other are separated by the plurality of the main body portions 310.

It can be understood that, in the present embodiment, both the first cell unit 100 and the second cell unit 200 have a layered structure having a plurality of electrode sheets. The use of the first cell unit 100 and the second cell unit 200 to assemble the thermally composite laminated cell reduces the number of folding of the continuous separator 300 and improves the processing efficiency of the thermally composite laminated cell, compared with the assembly of a single negative electrode sheet and a positive electrode sheet into the thermally composite laminated cell. The number of layers of the first cell unit 100 and the second cell unit 200 is limited, which is beneficial to control the alignment of the electrode sheets in the first cell unit 100 and the second cell unit 200, and when the alignment of the first cell unit 100 and the second cell unit 200 is good, the alignment of the thermally composite laminated cells prepared by combining the first cell unit 100 and the second cell unit 200 is also good, and the alignment of the thermally composite laminated cells is ensured.

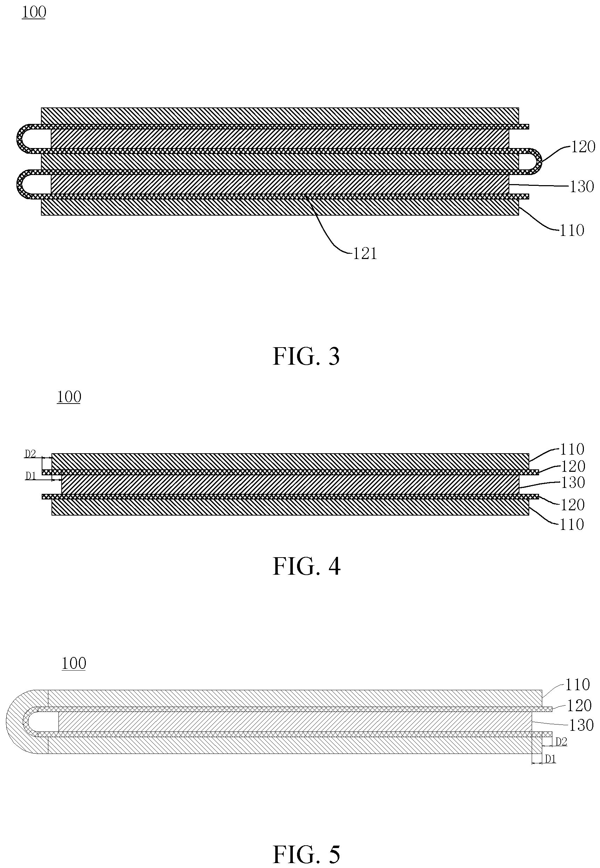

In some embodiments, as shown in FIG. 3, FIG. 4, FIG. 5, and FIG. 6, the negative electrode sheet 110 is an electrode sheet having a monolithic structure or an electrode sheet having a continuous structure, as shown in FIG. 3, FIG. 4, FIG. 5, and FIG. 6, the negative electrode sheet 110 is an electrode sheet having a monolithic structure or an electrode sheet having a continuous structure.

In some embodiments, referring to FIG. 3, FIG. 4, FIG. 5, and FIG. 6, the separator 120 is a film material having a monolithic structure or a film material of a continuous structure.

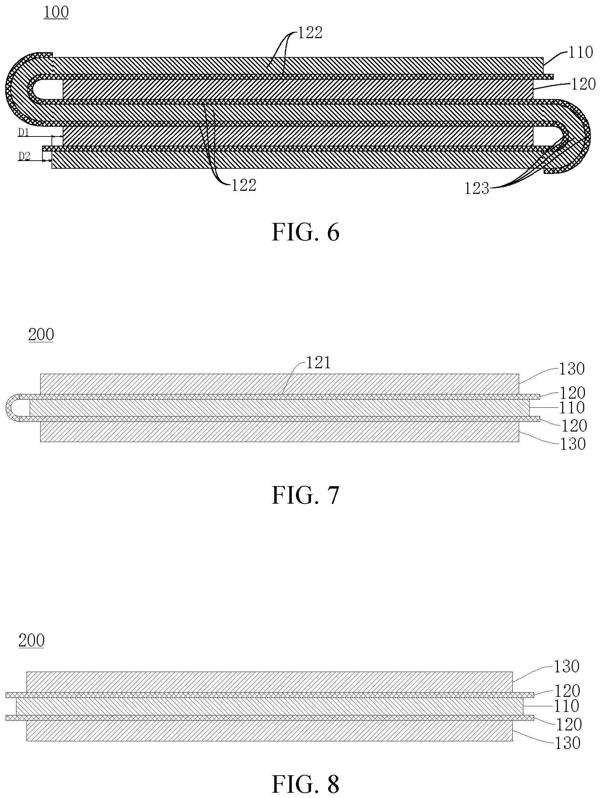

Among them, the first cell unit 100 includes the following four forms:
Form 1: referring to FIG. 3, when the negative electrode sheet 110 of the first cell unit 100 is a single electrode sheet. The separator 120 of the first cell unit 100 is a film material having a continuous structure. The separator 120 is folded in a Z-shape. The separator 120 forms an isolation portion 121. The negative electrode sheet 110 and the positive electrode sheet 130 are bonded to both sides of the isolation portion 121, respectively. The negative electrode sheet 110, the positive electrode sheet 130, and the separator 120 can be connected by thermal compounding, and the outermost side of the first cell unit 100 is the negative electrode sheet 110.
Form 2: referring to FIG. 4, when the negative electrode sheet 110 of the first cell unit 100 is a monomer structure electrode sheet, the separator 120 of the first cell unit 100 is also a film material having a monomer structure, and the size of the separator 120 is larger than that of the negative electrode sheet 110. The negative electrode sheet 110 and two positive electrode sheet 130 are bonded to both sides of the separator 120, respectively, and the outermost side of the first cell unit 100 is the negative electrode sheet 110.
Form 3: referring to FIG. 5, when the negative electrode sheet 110 of the first cell unit 100 is an electrode sheet having a continuous structure. When one positive electrode sheet 130 is provided, the separator 120 of the first cell unit 100 is a film material having a continuous structure. The negative electrode sheet 110 is bonded to one side surface of the separator 120. The negative electrode sheet 110 and the separator 120 are U-shaped. The positive electrode sheet 130 is positioned in a space where the separator 120 is bent. The positive electrode sheet 130 is bonded to the separators 120 on its both sides.
Form 4: referring to FIG. 6, the first cell unit 100 is composed of a negative electrode sheet 110 having a continuous structure, two separators 120 having a continuous structure, and a plurality of positive electrode sheets 130 having a monomer structure, wherein the length of one separator 120 is smaller than the length of the other separator 120, the negative electrode sheet 110 is compounded between the two separators 120, and a composite structure formed by the negative electrode sheet 110 and the two separators 120 is folded in a Z-shape which comprises a plurality of first horizontal portions 122 and a plurality of first connecting portions 123 that are alternately and continuously arranged. The outermost sides of the negative electrode sheets 110 located on two ends of the first horizontal portions 122 are exposed. The exposed portion of the negative electrode sheet 110 has a size larger than that of the positive electrode sheet 130. The first horizontal portions 122 and the positive electrode sheet 130 are alternately arranged in a thickness direction of the positive electrode sheet 130. The positive electrode sheet 130 and the negative electrode sheet 110 that is horizontally arranged are separated by the separator 120. Both of the outermost sides of the first cell unit 100 are provided with the negative electrode sheets 110.

Moreover, the second cell unit 200 includes three forms as follows.

Form 1: referring to FIG. 7, the second cell unit 200 is formed by stacking a negative electrode sheet 110 having a monomer structure, a separator 120 having a continuous-structure, and two positive electrode sheets 130 having a monomer structure. The separator 120 is bent to form an isolation portion 121. The negative electrode sheet 110 is located between the two positive electrode sheets 130. The negative electrode sheet 110 and the positive electrode sheet 130 are separated by the isolation portion 121. The negative electrode sheet 110 and the positive electrode sheet 130 can be connected to the separator 120 by thermal compounding, and the outermost side of the second cell unit 200 is the positive electrode sheet 130.

Form 2: referring to FIG. 8, when the negative electrode sheet 110 of the second cell unit 200 is an electrode sheet having a monomer structure, the separator 120 of the second cell unit 200 is a film material having a monomer structure, and the size of the separator 120 is larger than that of the negative electrode sheet 110. The negative electrode sheet 110 and the positive electrode sheet 130 are bonded to both sides of the separator 120, respectively, and the outermost side of the second cell unit 200 is the positive electrode sheet 130.

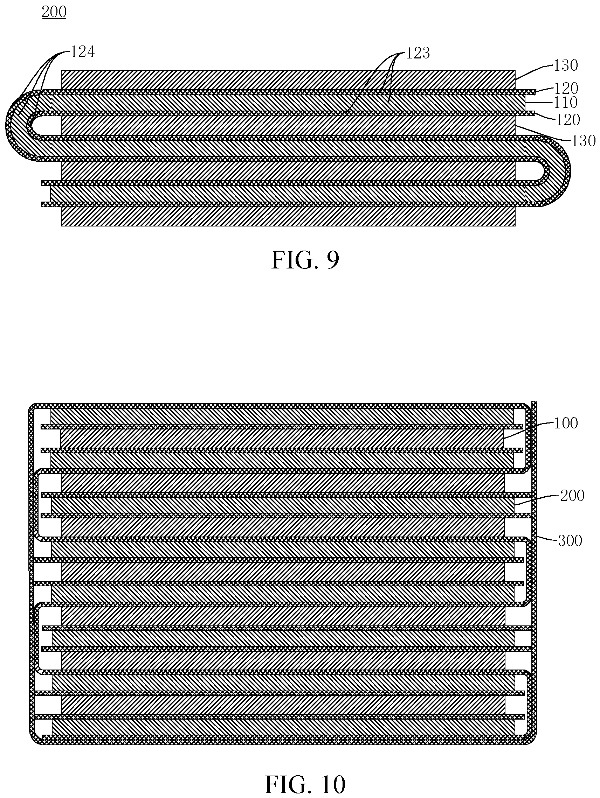

Form 3: referring to FIG. 9, the second cell unit 200 is formed by stacking a negative electrode sheet 110 having a continuous structure, two separators 120 having a continuous structure, and a plurality of positive electrode sheets 130 having monomer structures. The negative electrode sheet 110 is compounded between the two separators 120. A composite structure formed by the negative electrode sheet 110 and the separator 120 is folded in a Z-shape, which comprises a plurality of second horizontal portions 124 and a plurality of second connection portions 125. The plurality of second horizontal portions 124 and the plurality of the second connection portions 125 are alternately and continuously arranged. Along a thickness direction of the positive electrode sheet 130, the positive electrode sheet 130 and the second horizontal portion 124 are alternately arranged. The outermost side of the second cell unit 200 is the positive electrode sheet 130.

It can be understood that, the four forms of the first cell unit 100 described above can be arbitrarily combined with the three forms of the second cell unit 200 to form a thermally composite laminated cell.

In some embodiments, as shown in FIG. 1 and FIG. 2, the first cell unit 100 is formed by sequentially stacking a negative electrode sheet 110 having a monomer structure, a separator 120 having a monomer structure, a positive electrode sheet 130 having a monomer structure, a separator 120 having a monomer structure, and a negative electrode sheet 110 having a monomer structure.

It can be understood that, in this embodiment, the first cell unit 100 adopts a five-layer structure. The first cell unit 100 is the smallest unit, which is suitable for the assembly of thermal composite laminated cells of various thicknesses. The number of layers of the first cell unit 100 is reasonably designed to ensure the alignment of the first cell unit 100.

In some embodiments, as shown in FIG. 1 and FIG. 2, the second cell unit 200 is formed by sequentially stacking a positive electrode sheet 130, a separator 120, a negative electrode sheet 110, a separator 120, and a positive electrode sheet 130 all having a monomer structure.

It can be understood that, in the present embodiment, the second cell unit 200 adopts a five-layer structure. The second cell unit 200 is the smallest unit, which is suitable for the assembly of thermal composite laminated cells of various thicknesses. The number of layers of the first cell unit 100 is reasonably designed to ensure the alignment of the second cell unit 200.

In some embodiments, as shown in FIG. 2, the negative electrode sheet 110 includes a negative electrode current collector 111 and a negative electrode active layer 112. The negative electrode active layer 112 covers both sides of the negative electrode current collector 111.

In some embodiments, a material of the negative electrode current collector 111 may be copper. A material of the negative electrode active layer 112 may be graphite.

In some embodiments, as shown in FIG. 2, the outermost negative electrode sheet 110 of the first cell unit 100 on its both sides is bonded to the main body portion 310.

It can be understood that, as shown in FIG. 2, the M first cell units 100 comprise, in order from bottom to top, a 1st first cell unit 100,..., a M^{th} first cell unit 100. The N second cell units 200 comprise, in the order from bottom to top, a 1st second cell unit 200, ..., a N^{th} second cell unit 200. The i^{th} second cell unit 200 is located above the i^{th} first cell unit 100. In this embodiment, the outermost negative electrode sheet 110 in the 1st first cell unit 100 is covered by a continuous separator 120. The outermost negative electrode sheet 110 in the M^{th} first cell unit 100 is covered by a continuous separator 120 to ensure the electrical performance of the thermally composite laminated cell.

In some embodiments, as shown in FIG. 2, the outermost negative electrode sheets 110 in the first cell unit 100 located on both sides each include a negative electrode current collector 111 and a negative electrode active layer 112. The negative electrode active layer 112 is provided on a side of the negative electrode current collector 111 close to the main body portion 310.

It can be understood that, in the present embodiment, the outermost negative electrode sheet 110 in the 1st first cell unit 100 and the outermost negative electrode sheet 110 in the M^{th} first cell unit 100 only include the negative electrode current collector 111 and the negative electrode active layer 112. The negative electrode active layer 112 is provided on the side of the negative electrode current collector 111 close to the main body portion 310, and the negative electrode current collector 111 on the other side serves as the outermost side of the thermal composite laminated cell, the required length of the continuous separator 300 is reduced, and the electrical performance of the thermal composite laminated cell can also be satisfied, and the material usage of the negative electrode active layer 112 and the continuous separator 300 can be reduced, and the cost can be reduced.

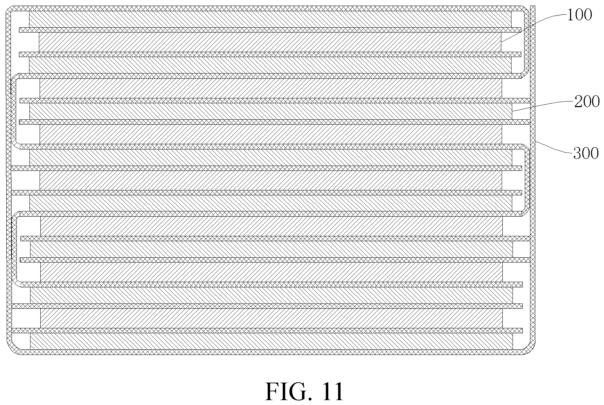

In some embodiments, as shown in FIG. 10 and FIG. 11, all of the first cell units 100 and all of the second cell units 200 form a stacked structure, and a remaining portion of the continuous separator 300 wraps around the stacked structure at least one circle after finishing its Z-shaped folding.

In this embodiment, as shown in FIG. 10, the continuous separator 300 is bonded from one end of the outermost negative electrode sheet 110 of the 1st first cell unit 100 to the other end, and is folded in a Z-shape until one end of the outermost negative electrode sheet 110 of the M^{th} first cell unit 100 is completed, and the remaining portion of the continuous separator 300 is wrapped around the laminated sheet structure at least one circle, so that the periphery of the laminated sheet structure is wrapped by the continuous separator, so as to avoid the exposure of the ends of the negative electrode sheet 110 and the positive electrode sheet 130 and avoid the drop powder of the negative electrode sheet 110 and the positive electrode sheet 130 and improve the reliability of the thermal composite laminated cell.

As a modification, as shown in FIG. 11, the continuous separator 300 is bonded from one end between the 1st first cell unit 100 and the 1st second cell unit 200, and folded in a Z-shape until one end of the outermost negative electrode sheet 110 of the M^{th} first cell unit 100 is finished, the remaining portion of the continuous separator 300 is wrapped around the laminated structure at least one circle after the end of the outermost negative electrode sheet 110 of the M^{th} first cell unit 100, so that the periphery of the laminated sheet structure is wrapped by the continuous separator, so as to avoid the exposure of the ends of the negative electrode sheet 110 and the positive electrode sheet 130 and avoid the drop powder of the negative electrode sheet 110 and the positive electrode sheet 130 and improve the reliability of the thermal composite laminated cell.

In some embodiments, as shown in FIG. 3, FIG. 4, FIG. 5, and FIG. 6, a projection of the positive electrode sheet 130 on a plane in which the negative electrode sheet 110 is positioned falls completely within the negative electrode sheet 110.

It can be understood that, the size of the negative electrode sheet 110 is larger than that of the positive electrode sheet 130 in the present embodiment. During the charging process of the lithium battery, the negative electrode sheet 110 can completely receive the lithium ions of the positive electrode sheet 130, avoid the formation of lithium dendrites, avoid the occurrence of thermal runaway caused by short circuit due to the formation of lithium dendrites piercing the continuous separator 300, and improve the reliability of the battery.

In some embodiments, referring to FIG. 3, FIG. 4, FIG. 5, and FIG. 6, a distance between an outer contour of the projection of the positive electrode sheet 130 on the plane of the negative electrode sheet 110 and a corresponding side edge of the negative electrode sheet 110 is D1, wherein 0.5 mm ≤ D1 ≤ 3.5 mm. Wherein the value of D1 may be 0.5 mm, 1 mm, 1.5 mm, 2 mm, 2.5 mm, 3 mm, 3.5 mm, or other unspecified numerical values.

It can be understood that, in this embodiment, the positive electrode sheet 130 is rectangular. The outer contour of the projection of the positive electrode sheet 130 in the plane where the negative electrode sheet 110 is located is rectangular. The distance between a long side of the rectangle and a long side of the negative electrode sheet 110 and the distance between a wide side of the rectangle and a wide side of the negative electrode sheet 110 are both D 1. The size design is reasonable, and on the premise of meeting the safety performance of the battery, the material waste and cost increase due to excessive size are avoided.

In some embodiments, referring to FIG. 3, FIG. 4, FIG. 5, and FIG. 6, a projection of the negative electrode sheet 110 on a plane in which the separator 120 is positioned falls completely within the separator 120.

It can be understood that, when the separator 120 is a film material having a monomer structure, the size of the separator 120 is larger than that of the negative electrode sheet 110, and the projection of the size of the negative electrode sheet 110 on the separator 120 completely falls into the separator 120. When the separator 120 is a film material having a continuous structure and the negative electrode sheet 110 is a monomer structure, the isolation portion 121 of the separator 120 has a size larger than that of the negative electrode sheet 110. The projection of the negative electrode sheet 110 on the separator 120 completely falls into the separator 121. When the separator 120 is a film material having a continuous structure and the negative electrode sheet 110 has a monomer structure, the size of the separator 120 is larger than that of the negative electrode sheet 110, and the projection of the negative electrode sheet 110 on the separator 120 completely falls into the separator 120.

The negative electrode sheet 110 and the positive electrode sheet 130 are separated by the separator 120. If the size of the separator 120 is smaller than the size of the negative electrode sheet 110, the negative electrode sheet 110 and the positive electrode sheet 130 may be connected directly, resulting in thermal runaway caused by a short circuit. The size of the separator 120 is designed to be larger than the size of the positive electrode sheet 130, so as to meet the electrical safety requirements of the thermal composite laminated cell and improve the reliability of the thermal composite laminated battery core.

In some embodiments, referring to FIG. 3, FIG. 4, FIG. 5, and FIG. 6, the distance between an outer contour of the projection of the negative electrode sheet 110 on the plane in which the separator 120 is located and the corresponding side edge of the separator 120 is D2, wherein 1 mm ≤ D2 ≤ 4 mm. The value of D2 may be 1 mm, 1.5 mm, 2 mm, 2.5 mm, 3 mm, 3.5 mm, 4 mm, or other unspecified values.

The sizes of the separator 120 and the negative electrode sheet 110 are reasonably designed such that on the premise of satisfying the safety performance of the battery, material waste and cost increase due to excessive size are avoided.

When the separator 120 is a film material having a monomer structure, D2 is a distance between a side edge of the separator 120 and the side edge of the negative electrode sheet 110. When the separator 120 is a film material having a continuous structure and the negative electrode sheet 110 has a monomer structure, D2 is a distance between the side edge of the isolation portion 121 of the separator 120 and the side edge of the negative electrode sheet 110. When the separator 120 is a film material having a continuous structure and the negative electrode sheet 110 has a continuous structure, D2 is a distance between the side edge or an end portion of the separator 120 and the side edge or an end portion corresponding to the negative electrode sheet 110. Each of the above distances refers to the distance between projections in the same plane.

Embodiments of the present application also provide a battery including a thermally composite laminated cell. The battery is beneficial to simplify production steps, improve production efficiency and improve the alignment of electrode sheets in the battery.

## Claims

1. A thermal composite laminated cell, **characterized in that** the thermal composite laminated cell comprises:
a plurality of first cell units (100);
a plurality of second cell units (200), wherein each of the plurality of the first cell units (100) and each of the plurality of the second cell units (200) both comprises a negative electrode sheet (110), a separator (120), and a positive electrode sheet (130), the negative electrode sheet (110) and the positive electrode sheet (130) are alternately disposed in a thickness direction, and the negative electrode sheet (110) and the positive electrode sheet (130) are separated by the separator (120), two outermost sides of each of the plurality of the first cell units (100) are the negative electrode sheets (110), and two outermost sides of each of the plurality of the second cell units (200) are the positive electrode sheets (130);
a continuous separator (300), wherein the continuous separator (300) comprises a plurality of main body portions (310) and a plurality of bent portions (320) all alternately and continuously disposed, the plurality of the first cell units (100) and the plurality of the second cell units (200) are alternately disposed in a thickness direction, and the plurality of the first cell units (100) and the plurality of the second cell units (200) adjacent to each other are separated by the plurality of the main body portions (310).

2. The thermal composite laminated cell according to claim 1, wherein the negative electrode sheet (110) is an electrode sheet having a monomer structure or a continuous structure; and/or
the separator (120) is a film material having a monomer structure or a continuous structure.

3. The thermal composite laminated cell according to claim 1, wherein the first cell unit (100) is formed by sequentially stacking the negative electrode sheet (110) having a monomer structure, the separator (120) having a monomer structure, the positive electrode sheet (130) having a monomer structure, the separator (120) having a monomer structure, and the negative electrode sheet (110) having a monomer structure; and/or
the second cell unit (200) is formed by sequentially stacking the positive electrode sheet (130) having a monomer structure, the separator (120) having a monomer structure, the negative electrode sheet (110) having a monomer structure, the separator (120), and the positive electrode sheet (130) having a monomer structure.

4. The thermal composite laminated cell according to claim 1, wherein the first cell unit (100) is formed by stacking the negative electrode sheet (110) having a continuous structure, the separator (120) having a continuous structure, and the positive electrode sheet (130) having a monomer structure; wherein the negative electrode sheet (110) is bonded to one side of the separator (120), the negative electrode sheet (110) and the separator (120) are bent, and the positive electrode sheet (130) is located in a space formed by bent the separator (120), and is bonded to the separator (120) on its both sides.

5. The thermal composite laminated cell according to claim 1, wherein the first cell unit (100) is formed by stacking the negative electrode sheet (110) having a continuous structure, two separators (120) having a continuous structure, and a plurality of positive electrode sheets (130) having a monomer structure, wherein a length of one separator (120) is smaller than a length of the other separator (120), the negative electrode sheet (110) is compounded between the two separators (120), and a composite structure formed by the negative electrode sheet (110) and the separators (120) is folded in a Z-shape, which includes a plurality of first horizontal portions (122) and first connecting portions (123), which are alternately and continuously arranged; the two outermost sides of each of the negative electrode sheet (110) on the horizontal portion (122) are exposed, and the first horizontal portion (122) and the positive electrode sheet (130) are alternately disposed along a thickness direction of the positive electrode sheet (130).

6. The thermal composite laminated cell according to claim 1, wherein the second cell unit (200) is formed by stacking a negative electrode sheet (110) having a monomer structure, a separator (120) having a continuous-structure, and two positive electrode sheets (130) having a monomer structure, wherein the separator (120) is bent to form an isolation portion (121), the negative electrode sheet (110) is located between the two positive electrode sheets (130), and the negative electrode sheet (110) and the positive electrode sheet (130) are separated by the isolation portion (121).

7. The thermal composite laminated cell according to claim 1, wherein the second cell unit (200) is formed by stacking a negative electrode sheet (110) having a continuous structure, two separators (120) having a continuous structure, and a plurality of positive electrode sheets (130) having monomer structures, wherein the negative electrode sheet (110) is compounded between the two separators (120), and a composite structure formed by the negative electrode sheet (110) and the separator (120) is folded in a Z-shape, which comprises a plurality of second horizontal portions (124) and a plurality of second connection portions (125), the plurality of second horizontal portions (124) and the plurality of the second connection portions (125) are alternately and continuously arranged; the positive electrode sheet (130) and the second horizontal portion (124) are alternately arranged in a thickness direction of the positive electrode sheet (130).

8. The thermal composite laminated cell according to any one of claim 1 to claim 7,
wherein the negative electrode sheet (110) comprises a negative electrode current collector (111) and a negative electrode active layer (112), and the negative electrode active layer (112) covers both sides of the negative electrode current collector (111); and/or
the outermost negative electrode sheets (110) of the first battery cell unit (100) on its both sides comprise a negative electrode current collector (111) and a negative electrode active layer (112), and the negative electrode active layer (112) is arranged on one side of the negative electrode current collector (111) close to the main body portion (310).

9. The thermal composite laminated cell according to any one of claim 1 to claim 7,
wherein the outermost negative electrode sheets (110) of the first battery cell units (100) on its both sides are respectively bonded to one of the main body portions (310).

10. The thermal composite laminated cell according to any one of claim 1 to claim 9,
wherein all of the first cell units (100) and all of the second cell units (200) form a stacked structure, and after the Z-shaped folding of the continuous separator (300) is completed, a remaining portion of the continuous separator (300) wraps around the stacked structure at least one circle.

11. The thermal composite laminated cell according to any one of claim 1 to claim 9,
wherein a projection of the positive electrode sheet (130) in a plane in which the negative electrode sheet (110) is located completely falls into the negative electrode sheet (110).

12. The thermal composite laminated cell according to claim 11, wherein a distance between an outer contour of the projection of the positive electrode sheet (130) in the plane of the negative electrode sheet (110) and a corresponding side edge of the negative electrode sheet (110) is D1, wherein 0.5 mm ≤ D1 ≤ 3.5 mm.

13. The thermal composite laminated cell according to any one of claim 1 to claim 9,
wherein a projection of the negative electrode sheet (110) in a plane in which the separator (120) is located completely falls into the separator (120).

14. The thermal composite laminated cell according to claim 13, wherein a distance between an outer contour of the projection of the negative electrode sheet (110) in the plane of the separator (120) and a corresponding side edge of the separator (120) is D2, wherein 1 mm ≤ D2 ≤ 4 mm.

15. A battery cell, comprising:
the thermal composite laminated cell according to any one of claim 1 to claim 14.
